# EUROPEAN PATENT SPECIFICATION

(11) **EP 0 361 884 B1**
(45) Date of publication and mention of the grant of the patent: **19.10.1994**
(21) Application number: 89309822.8
(22) Date of filing: 27.09.1989
(51) Int. Cl.: H04M 1/60

(54) **Noise reduction in speech transmitter circuits**
Rauschverminderung in Sprachübertragungsschaltungen
Réduction du bruit dans les circuits de transmission de parole

(30) Priority: 30.09.1988 GB 8823080
(43) Date of publication of application: 04.04.1990
(73) Proprietor: NORTHERN TELECOM LIMITED, Montreal, Quebec H2Y 3Y4 (CA)
(72) Inventor: Barnes, George John Preston, Harlow Essex CM17 0MF (GB); Tester, Norman William, Harlow Essex (GB)
(74) Representative: Dennis, Mark Charles

(56) References cited:
- EP-A- 0 259 218
- DE-A- 2 917 571
- FR-A- 2 236 320
- US-A- 3 751 602
- US-A- 3 889 059
- US-A- 4 513 177
- PATENT ABSTRACTS OF JAPAN, vol. 11, no. 359 (E-559)[2806], 21st November 1987;& JP-A-62 133 848 (ROHM CO.) 17-06-1987
- PATENT ABSTRACTS OF JAPAN, vol. 9, no. 315 (E-365)[2038], 11th December 1985;& Jp-A-60 148 259 (NITSUPOU TSUUSHIN KOGYO K.K.) 05-08-1985

## Description

This invention relates to the reduction of noise in speech transmitter circuits such as are used in telephony, public address systems etc.

In telephony the presence of the sidetone signal, whereby the speaker hears and regulates the level of his own voice, can under some circumstances cause difficulty. For example, if it is too loud the speaker reduces the level of his voice with the result that transmission to the far end is impaired. If there is substantial room noise present that room noise is picked up by the telephone microphone and transmitted via the sidetone path to the listener's ear, so masking the received speech signals of his correspondent at the far end. Attempts are normally made in telephone set design to control the sidetone path by careful choice of impedance matching circuits so that the sidetone signals are within acceptable limits. The circuit description given in this document is aimed at reducing the level of the noise received at the earphone of the handset, thus improving the ability of the user at the noisy end to hear and to understand received speech signals.

In practice, when a speaker is in a noisy location, he/she often attempts to hear the received speech better by covering up the ear to which the handset is NOT applied. This does not reduce the masking effects of the noise transmitted via the sidetone path of the received speech. A better method is to cover up the microphone in the handset thus reducing the noise signal into the transmission circuit, the sidetone path, and, in particular, at the earphone. This latter point enables the incoming speech to be heard unmasked by room noise. A similar problem arises when a microphone located in a noisy environment is to be used in a public address system.

One way to provide a simple means for improving matters for the telephone user in noisy surroundings would be to fit the telephone with a push button switch that mutes the microphone, and that is operated when he is listening. Another method that has been used is to provide the microphone amplifier with two gain states, a low gain for use when the user is not speaking, and a high gain state, operational when the microphone audio level exceeds a predetermined threshold. This effectively approximates to the gain characteristic of earlier carbon microphones which did not exhibit the room noise sensitivity of current linear microphones. A disadvantage of this latter method is that the voice switching is always present whether or not there is any room noise problem and the switching threshold and switched attenuation are fixed rather than adapting to the conditions.

Voice Operated (or Noise Operated) Gain Adjusting Devices (VOGAD or NOGAD) are known. However VOGADs usually have a preset gain shift upon detection of speech albeit that gain shift can be determined by a supplementary control, e.g. a volume control. NOGADs are usually a supplementary amplifier stage that although sensitive to the required signals for transmission, do not actually form part of the transmission path to the output stages.

FR-A-2 236 320 discloses a noise reduction arrangement for a speech transmitter circuit including gain control circuits which operate in a feedforward loop from the microphone input.

According to the present invention there is provided a noise reduction arrangement for a speech transmitter circuit, including a variable attenuator followed by an amplifier, characterised in that the circuit includes a feedback loop from the output of the amplifier, the feedback loop including means for discriminating between speech and background noise signals in the transmitter circuit comprising a noise responsive circuit to which the signals being sent to the line are applied, a speech responsive circuit to which the signals being sent to line are applied, and a comparator to which the outputs of the noise responsive and speech responsive circuits are applied, the output of the comparator forming a control signal for the variable attenuator to maintain the level of the background noise signal substantially constant in the absence of speech signals.

Embodiments of the invention are now described with reference to the accompanying drawings, in which:
Fig. 1 illustrates a noise reduction arrangement for an analogue telephone,
Fig. 2 illustrates a modification to part of the arrangement of Fig. 1,
Fig. 3 illustrates a noise reduction arrangement for a digital telephone, and
Fig. 4 illustrates an alternative noise reduction arrangement for a digital telephone.

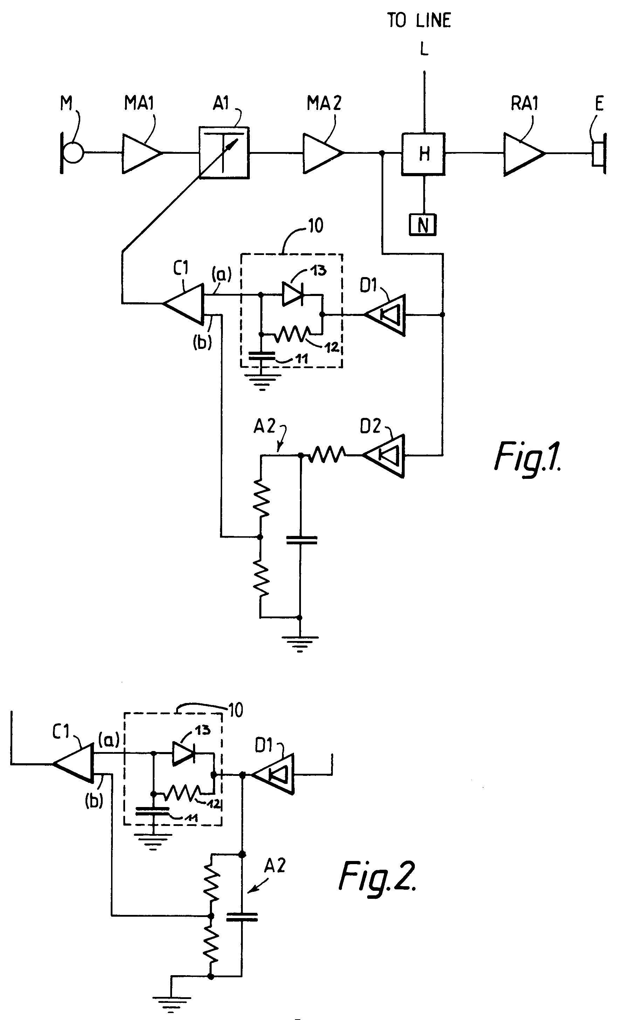

In the circuit illustrated in Figure 1 the microphone-to-line transmission chain in an analogue telephone set is microphone M, amplifier MA1, variable attenuator A1, amplifier MA2, hybrid circuit H and line L. Similarly the receiver path is line L, hybrid H, amplifier RA1 and earphone E.

The sidetone path is from M to E through the amplifiers MA1, MA2, RA1 and the attenuator A1 and the hybrid circuit H. The sidetone path attenuation with A1 at zero loss, is determined by the out of balance between the impedance of the line circuit L compared to that of the hybrid balance network N.

Noise at M appears at the output of MA2 as an electrical signal that is rectified in the circuits D1 and D2. At the output of rectifying circuit D1 a noise responsive circuit 10 is provided that has a slow rise/quick fall characteristic. This is achieved by charging a capacitor 11 through a resistor 12 which is shunted by a reverse biassed diode 13. When the signal level rises, e.g. due to the presence of speech, the capacitor is rapidly discharged. It is therefore sensitive to the lowest signal levels, or the troughs of the noise or speech signal, and passes to one input (a) of the dc comparator C1 a dc level in proportion to these troughs. At the output of peak rectifying circuit D2 an attenuator A2 is provided that attenuates the rectified signal from MA2 and is sensitive to the peaks of the speech or noise signal at the output of MA2. The output of circuit A2 is passed to the other input (b) of comparator C1.

One characteristic of room noise is that its peak to trough ratio is relatively small, particularly when compared with speech. Thus with only room noise present at the microphone the dc level at C1(a) is larger than at C1(b). Under these conditions C1 passes a control signal to A1 that begins to increase its attenuation, so reducing the level of the noise signal at MA2, and the inputs to D1 and D2. A feedback mechanism therefore takes place controlling the noise level at MA2 to be almost constant. When speech arrives at M the peak to trough ratio at the inputs to D1 and D2 changes and the level at input C1(b) exceeds that at C1(a). C1 then reverses its action on A1 and restores the through gain from M to the Line L. Attenuator A2 is set so that there is proper discrimination between noise and speech. Time constants of the various resistor/capacitor combinations are chosen so as to give optimum attack and decay times in the switching operation. With no noise present at M the dc level at C1(a) is backed off with a dc threshold to be less than C1(b) to ensure that A1 is at zero loss.

In the modification shown in Figure 2 the attenuator circuit A2 is fed directly from the rectifying circuit D1.

The normal sidetone for digital telephone sets is generally too quiet and would make the subset appear "dead" to the user. Therefore, an additional sidetone path is usually provided between the microphone and the receiver to give a comfortable level of sidetone in a quiet environment. In noisy conditions however this would have the same problem of masking of the received signal by the noise on the sidetone path.

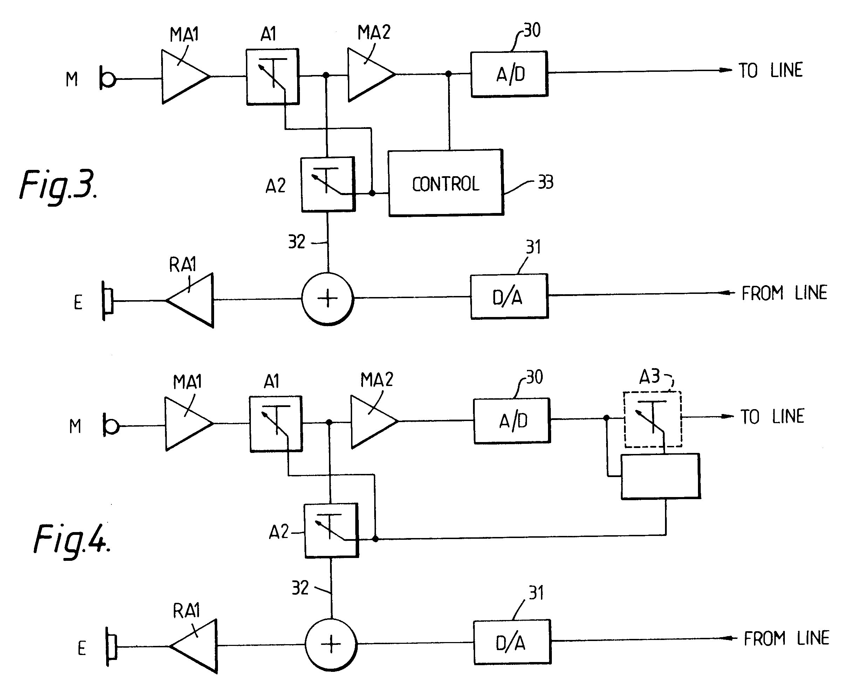

Fig. 3 illustrates an arrangement for providing effective reduction in background noise in a digital telephone having a specially provided sidetone path. The transmitter circuit from the microphone M is via amplifier MA1, variable attenuator A1, amplifier MA2 and analogue/digital converter 30. The receiver path is via digital/analogue converter 31 and amplifier RA1 to the earphone E. Sidetone is provided via a special connection 32 between the separate transmit and receive circuits.

To effect noise reduction in the transmit circuit noise and speech responsive circuits and a comparator, which together make up a control circuit 33, are as in Fig. 1. The output of the control circuit is a control signal applied to the variable attenuator A1 in the transmitter path. A second variable attenuator A2 is inserted in the sidetone path 32 and this is also responsive to the control signal. The attenuators A1 and A2 may have different characteristics in response to the same control signal, e.g. they are acting on different levels of speech signals and therefore may have different rates of attenuation.

The arrangement of Fig. 3 assumes that the control circuitry 33 operates in the analogue domain. It may be more cost effective to perform the control process in the digital domain, as shown in Fig. 4. In this case the control circuit input is taken from the output of the A/D converter 30. This could occur, for example, in so-called "feature phones" that include digital processing facilities for other reasons, such as in handsfree telephone sets having digital control. In this case the discrimination performed in the digital signal processing circuitry, although it is still based on the same criteria as in the analogue case, i.e. on the ratio of the peak-to-trough digital signal levels being different for speech and noise signals.

Likewise the attenuation can be performed using digitally controlled analogue attenuators A1 and A2.

In an alternative arrangement the analogue transmit path attenuator A1 can be replaced by a digital attenuator A3 in the digital portion of the transmitted circuit. The attenuator A3 can be either before the input to the control circuit or it can be after the input to control circuit 33, as indicated in Fig. 4.

In the latter case the second attenuator A2 is required to adjust the sidetone level.

## Claims

1. A noise reduction arrangement for a speech transmitter circuit, including a variable attenuator (A1) followed by an amplifier (MA2), characterised in that the circuit includes a feedback loop from the output of the amplifier, the feedback loop including means (D1, 10, C1, D2, A2) for discriminating between speech and background noise signals in the transmitter circuit comprising a noise responsive circuit (D1, 10) to which the signals being sent to the line are applied, a speech responsive circuit (D2, A2) to which the signals being sent to line are applied, and a comparator (C1) to which the outputs of the noise responsive and speech responsive circuits are applied, the output of the comparator forming a control signal for the variable attenuator to maintain the level of the background noise signal substantially constant in the absence of speech signals.

2. A noise reduction arrangement as claimed in claim 1, characterised in that the noise responsive circuit comprises a circuit (10) responsive to the lowest signal levels of noise and speech and the speech responsive circuit comprises a circuit (A2) which is responsive to the peak signal levels of noise and speech.

## Patentansprüche

1. Störgeräusch-Verringerungsanordnung für eine Sprachübertragungsschaltung, mit einem veränderlichen Dämpfungsglied (A1), das von einem Verstärker (MA2) gefolgt ist,
dadurch gekennzeichnet, daß die Schaltung eine Rückführungsschleife vom Ausgang des Verstärkers einschließt, daß die Rückführungsschleife Einrichtungen (D1, 10, C1, D2, A2) zur Unterscheidung zwischen Sprach- und Umgebungs-Störgeräuschsignalen in der Übertragungsschaltung einschließt, die eine auf Störgeräusche ansprechende Schaltung (D1, 10), der die auf die Leitung ausgesandten Signale zugeführt werden, eine auf Sprache ansprechende Schaltung (D2, A2), der die auf die Leitung ausgesandten Signale zugeführt werden, und einen Vergleicher (C1) umfassen, dem die Ausgangssignale der auf die Störgeräusche ansprechenden und der auf die Sprache ansprechenden Schaltungen zugeführt werden, und daß das Ausgangssignal des Vergleichers ein Steuersignal für das veränderliche Dämpfungsglied bildet, um den Pegel des Umgebungs-Störgeräuschsignals bei Fehlen von Sprachsignalen im wesentlichen konstant zu halten.

2. Störgeräusch-Verringerungsanordnung nach Anspruch 1, dadurch gekennzeichnet, daß die auf die Störgeräusche ansprechende Schaltung eine auf die niedrigsten Signalpegel der Störgeräusche und der Sprache ansprechende Schaltung (10) umfaßt, und daß die auf die Sprache ansprechende Schaltung eine Schaltung (A2) umfaßt, die auf die Spitzensignalpegel von Störgeräusch und Sprache anspricht.

## Revendications

1. Ensemble de réduction de bruit destiné à un circuit de transmission de parole, comprenant un atténuateur variable (A1) suivi d'un amplificateur (MA2), caractérisé en ce que le circuit comprend une boucle à réaction négative partant de la sortie de l'amplificateur, la boucle à réaction négative comprenant un dispositif (D1, 10, C1, D2, A2) de discrimination entre les signaux de parole et de bruit de fond dans le circuit émetteur comprenant un circuit sensible au bruit (D1, 10) auquel les signaux transmis à la ligne sont appliqués, un circuit (D2, A2) sensible à la parole auquel les signaux transmis à la ligne sont appliqués, et un comparateur (C1) auquel sont appliqués les signaux de sortie des circuits sensibles au bruit et sensibles aux paroles, le signal de sortie du comparateur formant un signal de commande de l'atténuateur variable afin que le niveau du signal de bruit de fond soit sensiblement constant en l'absence de signaux de parole.

2. Ensemble de réduction de bruit selon la revendication 1, caractérisé en ce que le circuit sensible au bruit comprend un circuit (10) commandé par les plus petits niveaux des signaux de bruit et de parole, et le circuit sensible aux paroles comprend un circuit (A2) sensible aux niveaux des signaux de crête de bruit et de parole.
